Europäisches Patentamt

**European Patent Office**

Office européen des brevets

(11) Veröffentlichungsnummer: **0 025 162**
**A1**

(12)
# EUROPÄISCHE PATENTANMELDUNG

(21) Anmeldenummer: **80105039.4**

(22) Anmeldetag: **25.08.80**

(51) Int. Cl.³: **B 65 F 1/14**
**B 60 B 33/00**

(30) Priorität: **05.09.79 DE 2935896**

(43) Veröffentlichungstag der Anmeldung:
**18.03.81 Patentblatt 81/11**

(84) Benannte Vertragsstaaten:
**AT BE CH FR GB IT LI LU NL SE**

(71) Anmelder: **Gebrüder OTTO KG.**
**Siegener Strasse 69**
**D-5910 Kreuztal(DE)**

(72) Erfinder: **Otto, Willy**
**Forstweg 12**
**D-5910 Kreuztal Kreis Siegen(DE)**

(74) Vertreter: **Staeger, Sigurd, Dipl.-Ing. et al,**
**Patentanwälte Dr.-Ing. H. Fincke Dipl.-Ing. H. Bohr,**
**Dipl.-Ing. S. Staeger Müllerstrasse 31**
**D-8000 München 5(DE)**

(54) **Beräderter Kunststoffgrossbehälter.**

(57) Die Erfindung bezieht sich auf einen beräderten Kunststoffgroßbehälter mit mindestens zwei schwenkbaren Rädern, deren Wellenhalterungen über Profilteile od. dgl. am Behälterboden befestigt sind, wobei durch im wesentlichen lotrecht von der Boden- und/oder Seitenwand abstehende Vorsprünge 8,9,10 ein Trägerteil 17 aus Metall zum Halten der Profilteile 3 od.dgl. anbringbar ist.

FIG. 1

EP 0 025 162 A1

Croydon Printing Company Ltd.

PATENTANWÄLTE
DR.-ING. H. FINCKE
DIPL.-ING. H. BOHR
DIPL.-ING. S. STAEGER

Patentanwälte Dr. Fincke · Bohr · Staeger · Müllerstr. 31 · 8000 München 5

1

8000 MÜNCHEN 5,
Müllerstraße 31
☎ (089) · 26 60 60
✠ Claims München
Telex: 5 239 03 claim d

Mappe No. B507-St/Li
Bitte in der Antwort angeben

**0025162**

2 5. AUG. 1980

GEBRÜDER O T T O K.G.
Siegener Straße 69
D-5910 Kreuztal

---

Beräderter Kunststoffgroßbehälter

---

Die Erfindung bezieht sich auf einen beräderten Kunststoffgroßbehälter, insbesondere Müllumleerbehälter mit
mindestens zwei um eine vertikale Achse verschwenkbaren
Rädern, deren U-förmige Wellenhalterungen über annähernd
waagerechte Platten, Plattenteile, Profilteile od.dgl. am
Behälterboden befestigt sind.

Aufgrund einer wirtschaftlicheren Herstellung setzen
sich Kunststoffgroßbehälter anstelle entsprechender Behälter aus Blech in steigendem Umfange durch. Derartige
Kunststoffgroßbehälter werden z.B. in Schlachthöfen oder
zum Transport von anderen Waren, jedoch vornehmlich bei
der Müllentsorgung verwendet.

Da derartige Kunststoffgroßbehälter, insbesondere
solche bei der Müllentsorgung einer besonders robusten
Behandlung ausgesetzt sind, ist die Lebensdauer derartiger
Behälter hauptsächlich von der Art der Anbringung der Räder
abhängig. Die Räder beanspruchen die Wandungen des Behälters in besonders großem Ausmaß, nicht nur, wenn der Behälter über Schwellen, Unebenheiten od.dgl. geschoben wird, sondern auch z.B. in der Schüttstellung am Müllwagen, wobei durch das wiederholte Anschlagen des eingehängten Müllumleerbehälters Stoßbelastungen aufgrund der relativ gewichtigen Räder auf die Wandteile ausgeübt werden.

Der Erfindung liegt die Aufgabe zugrunde, eine besonders sichere und feste Anbringung für die Räder an derartigen Kunststoffgroßbehältern zu schaffen.

Die Aufgabe wird dadurch gelöst, daß erfindungsgemäß durch im wesentlichen lotrecht von der Boden- und/oder Seitenwand abstehende Vorsprünge ein Trägerteil aus Metall gehalten ist, in bzw. an welchem die Platte od.dgl. über Bolzen, Schrauben, Nieten od.dgl. anbringbar ist.

Bevorzugterweise ist die Platte od.dgl. vom Trägerteil getrennt.

Nach einer besonders zweckmäßigen Ausführungsform der Erfindung sind die Vorsprünge als plattenförmige Rippen ausgebildet; die plattenförmigen Rippen können sich kreuzen.

Der Trägerteil ist zweckmäßigerweise als Stange, Rohr, Profilteil od.dgl. ausgebildet und in Öffnungen in den Rippen gehalten.
Bevorzugterweise weist der Trägerteil annähernd senkrecht zu seiner Längsachse Bohrungen zur Aufnahme der Bolzen, Schrauben, Nieten od.dgl. auf. Die Ränder der Rippen können Aussparungen od.dgl. zur unverschiebbaren Aufnahme der Platten od.dgl. aufweisen.

Wenn der Kunststoffgroßbehälter die Form eines Müllumleerbehälters aufweist, können die Rippenränder als Anschlagfläche in Entleerstellung ausgebildet sein.

Die Ränder der Vorsprünge verlaufen zweckmäßigerweise mit den Behälterumrissen bündig. Es ist aber auch möglich, daß die Ränder der Vorsprünge mindestens über die Bodenunterfläche des Behälters hinausragen.

Auf der Zeichnung ist eine beispielsweise Ausführungsform der Erfindung im Detail dargestellt; sie wird nachfolgend näher beschrieben; es zeigt:

Fig. 1  eine Ansicht gemäß Linie 1-1 in Fig. 2 auf eine
untere Ecke eines Kunststoffgroßbehälters  und
Fig. 2  eine Ansicht gemäß Linie 2-2 in Fig. 1 auf die
gleiche Ausführungsform.

Ein Müllgroßbehälter aus Kunststoff mit einem Inhalt
von 1,1 cbm - als Müllumleerbehälter nachfolgend bezeichnet - weist an einer Ecke seines Bodens 1 eine nicht dargestellte U-förmige Wellenhalterung für ein freilaufendes
Rad auf, welche um eine vertikale Achse 2 verschwenkbar
ist.

Die nicht dargestellte Wellenhalterung ist auf nicht
dargestellte Weise an einer rechteckigen Platte 3 angebracht, die aus Metall besteht und deren Unterseite 4
über die mit strichierten Linien 5 angedeutete Unterfläche der Bodenwand 1 hinausragt.

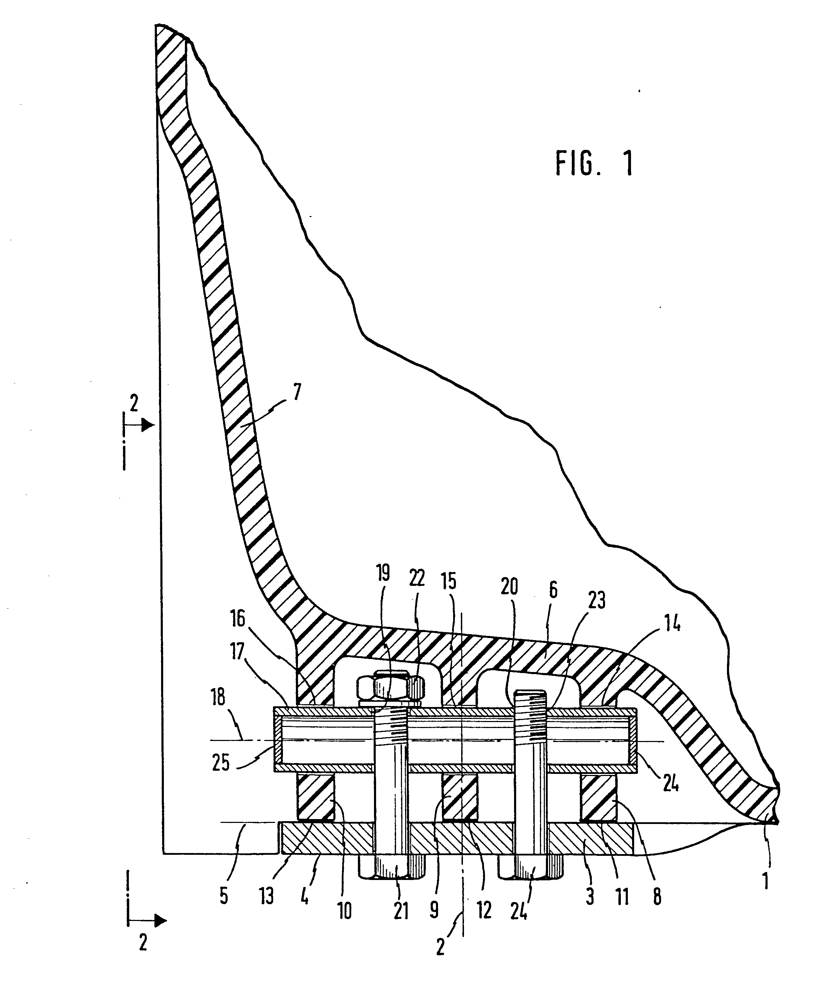

Wie aus Fig. 1 ersichtlich ist, ist die Bodenwand 1
im Eckbereich mit einer Ausbauchung 6 zum Behälterinneren
hin versehen und geht dann in die Seitenwand 7 über.

Parallel zur Verschwenkrichtung des nicht gezeigten
Deckels des Müllumleerbehälters verlaufen von der Ausbauchungsstelle 6 lotrecht nach unten abstehende plattenförmige Rippen 8, 9, 10 parallel zueinander, und zwar
jeweils mit gleichen Abständen. Nur im Bereich der Metallplatte 3 sind die Rippenränder 11, 12, 13 so weit ausgeschnitten, daß die Platte 3 eine glatte Anlage erhält,
andererseits jedoch nicht senkrecht zur Zeichenebene verschoben werden kann.

Die drei Rippen 8 bis 10 weisen in Ausfluchtung zueinander zwei Löcher 14 bis 16 auf, die jeweils ein Rohr
17 aufnehmen. Statt dieses Rohres kann selbstverständlich
auch eine massive Stange oder eine Platte in entsprechend
geformte Löcher der Kunststoffrippen 8 bis 10 eingefügt
oder eingeschoben werden.

Jedes Rohr 17 weist senkrecht zu seiner Längsachse 18
verlaufende Durchbrücke 19 bzw. 20 auf, in welchen die
Befestigungsmittel für die Platte 3 verschiebe- und wackelfrei geführt sind.

In den Durchbrüchen 19 ist ein Schraubenbolzen 21 eingesetzt, dessen Mutter 22 so weit aufgeschraubt ist, daß die Platte 3 fest an die Ränder 11 bis 13 der Rippen 8 bis 10 angedrückt wird.

Der Durchbruch 20 weist mindestens in einem Teilbereich ein Gewinde 23 auf, so daß in diesem Fall ein Schraubbolzen 24 in den Durchbruch eingeschraubt werden kann. Selbstverständlich kann auch ein Niet oder ein ähnliches stiftförmiges Befestigungsmittel Verwendung finden. Wie aus Fig. 1 ersichtlich ist, weist das Rohr 17 Endabdichtungen 24 und 25 auf.

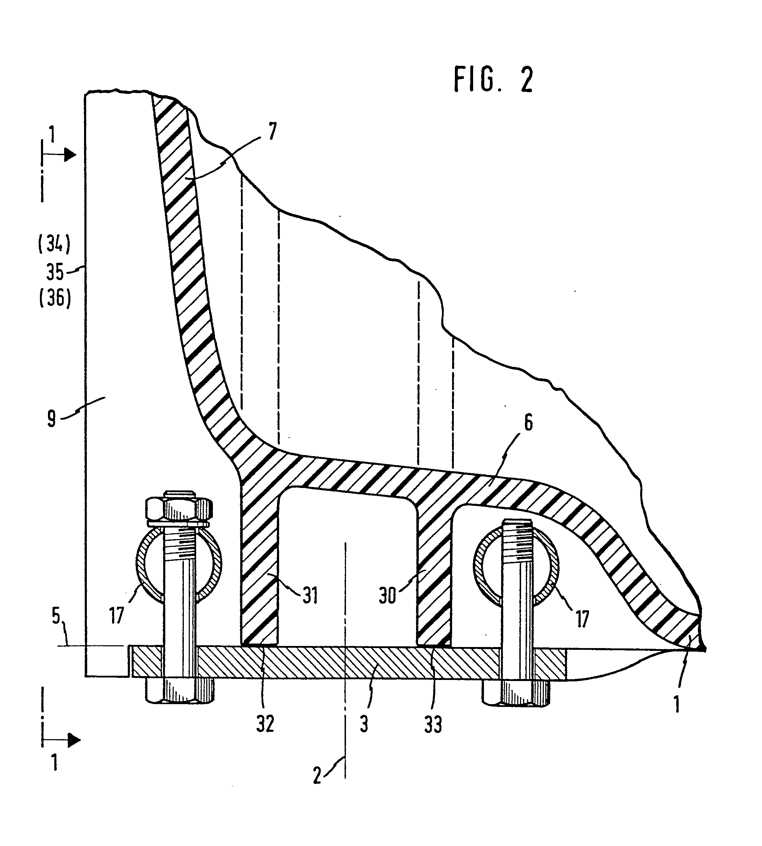

Senkrecht zu den Rippen 8 bis 10 verlaufen (Fig. 2) zwei plattenförmige Rippen 30 und 31, deren Ränder 32 und 33 - wie weiter oben beschrieben - so ausgeschnitten sind, daß auch in einer Ebene senkrecht zu der weiter oben beschriebenen Ebene ein unverschiebbarer Sitz der Platte 3 gewährleistet ist.

Die Stirnflächen der Rippen 8 bis 10 verlaufen lotrecht und in einer Ebene, so daß die Stirnflächen 34, 35 und 36 in der Schüttstellung des Müllumleerbehälters als Anschlagfläche wirken.

Die besondere Ausbildung der Vorsprünge in den - vereinfacht ausgedrückt - unteren Ecken des Behälters führt also einerseits nicht nur dazu, daß die Räder über die Metallplatte 3 und z.B. die Bolzen, Stifte od.dgl. in den Rohren, Stangen od.dgl., die ebenfalls aus Metall bestehen, festgehalten sind, sondern auch dazu, daß eine bessere, d.h. ebene Anschlagfläche in den Ecken des Müllumleerbehälters geschaffen wird, die ebenfalls zur Erhöhung der Lebensdauer des Müllbehälters beiträgt. Durch die besondere Lagerung der die Räder tragenden Teile des Behälters ist darüberhinaus auch sichergestellt, daß Risse in den Wandungen oder Sprünge in den Kunststoffteilen im Bereich der Räder weitgehend verhindert werden.

7

5

P A T E N T A N S P R Ü C H E

1. Beräderter Kunststoffgroßbehälter, insbesondere Müllumleerbehälter mit mindestens zwei um eine vertikale Achse verschwenkbaren Rädern, deren U-förmige Wellenhalterungen über annähernd waagerechte Platten, Plattenteile, Profilteile od.dgl. am Behälterboden befestigt sind, dadurch gekennzeichnet, daß durch im wesentlichen lotrecht von der Boden- und/oder Seitenwand abstehende Vorsprünge ein Trägerteil aus Metall gehalten ist, in bzw. an welchem die Platte od.dgl. über Bolzen, Schrauben, Nieten od.dgl. anbringbar ist.

2. Behälter nach Anspruch 1, dadurch gekennzeichnet, daß die Platte od.dgl. vom Trägerteil getrennt ist.

3. Behälter nach Anspruch 1 oder 2, dadurch gekennzeichnet, daß die Vorsprünge als plattenförmige Rippen ausgebildet sind.

4. Behälter nach Anspruch 3, dadurch gekennzeichnet, daß die plattenförmigen Rippen sich kreuzen.

5. Behälter nach Anspruch 1 oder folgende, dadurch gekennzeichnet, daß der Trägerteil als Stange, Rohr, Profilteil od.dgl. ausgebildet und in Öffnungen in den Rippen gehalten ist.

6. Behälter nach Anspruch 1 oder folgende, dadurch gekennzeichnet, daß der Trägerteil annähernd senkrecht zu seiner Längsachse Bohrungen zur Aufnahme der Bolzen, Schrauben, Nieten od.dgl. aufweist.

7. Behälter nach Anspruch 2 oder folgende, dadurch gekennzeichnet, daß die Ränder der Rippen Aussparungen od.dgl. zur unverschiebbaren Aufnahme der Platten od.dgl. aufweisen.

8. Behälter nach einem der vorhergehenden Ansprüche in Form eines Müllumleerbehälters, dadurch gekennzeichnet, daß die Rippenränder als Anschlagfläche in Entleerstellung ausgebildet sind.

9. Behälter nach Anspruch 1 oder folgende, dadurch gekennzeichnet, daß die Ränder der Vorsprünge mit den Behälterumrissen bündig verlaufen.

10. Behälter nach einem der Ansprüche 1 bis 8, dadurch gekennzeichnet, daß die Ränder der Vorsprünge mindestens über die Bodenunterfläche des Behälters hinausragen.

FIG. 1

FIG. 2

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | B 65 F 1/14 B 60 B 33/00 |
| | DE - B - 2 639 436 (SULO EISEN-WERK) <br><br> * Seite 3, linke Spalte, Zeile 19 bis Seite 6, rechte Spalte, Zeile 21; Figuren 1-6 * <br><br> -- <br><br> FR - A - 2 163 730 (SULO EISEN-WERK) <br><br> * Seite 3, Zeile 30 bis Seite 4, Zeile 17; Figuren 1-4 * <br><br> ----- | 1 <br><br><br><br><br> 1 | |

RECHERCHIERTE
SACHGEBIETE (Int. Cl.³)

B 65 F
B 60 B

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde
liegende Theorien oder
Grundsätze

E: kollidierende Anmeldung

D: in der Anmeldung angeführtes
Dokument

L: aus andern Gründen
angeführtes Dokument

&: Mitglied der gleichen Patentfamilie, übereinstimmendes
Dokument

Der vorliegende Recherchenbericht wurde für alle Patentansprüche erstellt.

| Recherchenort | Abschlußdatum der Recherche | Prüfer |
|---|---|---|
| Den Haag | 07-11-1980 | MARTENS |

EPA form 1503.1 06.78